(19) Europäisches Patentamt

European Patent Office

Office européen des brevets

(11) **EP 0 922 350 B1**

(12) **EUROPEAN PATENT SPECIFICATION**

(45) Date of publication and mention
of the grant of the patent:
**22.06.2005 Bulletin 2005/25**

(51) Int Cl.[7]: **H04B 7/12**, H04L 27/26,
H04B 7/04

(21) Application number: **98924210.2**

(22) Date of filing: **22.04.1998**

(86) International application number:
**PCT/EP1998/002463**

(87) International publication number:
**WO 1998/051048 (12.11.1998 Gazette 1998/45)**

(54) **COMMUNICATION SYSTEM HAVING DIVERSITY IN AN ORTHOGONAL FREQUENCY DIVISION MULTIPLEXING ENVIRONMENT AND OPERATING METHOD THEREFOR**

VERMITTLUNGSSYSTEM MIT DIVERSITÄT IN EINER ORTHOGONALEN FREQUENZMULTIPLEXUMGEBUNG, UND BETRIEBSVERFAHREN

SYSTEME DE COMMUNICATION PRESENTANT UNE DIVERSITE DANS UN ENVIRONNEMENT DE MULTIPLEXAGE PAR REPARTITION EN FREQUENCE ORTHOGONAL ET UN PROCEDE DE FONCTIONNEMENT POUR CE DERNIER

(84) Designated Contracting States:
**DE FI FR SE**

(30) Priority: **02.05.1997 GB 9709098**

(43) Date of publication of application:
**16.06.1999 Bulletin 1999/24**

(73) Proprietors:
• **Motorola Limited
Basingstoke, Hampshire RG22 4PD (GB)**
• **O'Neill, Rorie Julian Turnbull
Swindon, Wiltshire SN5 7AH (GB)**

(72) Inventor: **O'NEILL, Rorie, Julian, Turnbull
Swindon, Wiltshire SN5 7AH (GB)**

(74) Representative: **Jepsen, Rene Pihl et al
European Patent Attorney
Eltima Consulting
Shaftesbury Centre
Percy Street
Rodbourne
Swindon SN2 2AZ (GB)**

(56) References cited:
**EP-A- 0 600 547          WO-A-95/26040**

## Description

Background to the Invention

This invention relates, in general, to a communication system employing Orthogonal Frequency Division Multiplexing (OFDM) and is particularly, but not exclusively, related to a mechanism for providing diversity in cellular communication systems utilising high data rates in local areas.

Summary of the Prior Art

As a demand for information throughput increases in a conventional single carrier modulation scheme, the symbol duration must necessarily decrease (assuming that multilevel modulation schemes are neglected). Unfortunately, when the symbol duration becomes comparable to the dispersion introduced by a transmission channel then Inter Symbol Interference (ISI) results, and this significantly degrades performance. Equalisation may be used to counter this degradation by effectively providing frequency diversity performance gains. However, as channel dispersion increases relative to the symbol duration, the complexity of the required equaliser grows exponentially.

Multicarrier transmission schemes, such as OFDM, have been proposed for many different types of communication system, including Digital Audio Broadcasting (DAB) and broadband wireless Local Area Networks (LANs). In OFDM, a complex signal envelope is formed from the summation of frequency related subchannels onto which parallel data bits have been previously modulated to produce sub-channel symbols. In other words, a single transmission source transmits a symbol comprised from a set of parallel tones. The advantage of such schemes is that unlimited transmission rates are theoretically possible in highly time dispersive channels that arise from a summation of multiple delayed, attenuated and phase-shifted paths for a signal, and which therefore display a distorted characteristic. Indeed, an air interface based around OFDM is a strong candidate for use in the UMTS (Universal Mobile Telecommunications System). More particularly, OFDM systems can operate in highly dispersive conditions without the use of conventional equalisation because OFDM increases inter-symbol distances (by effectively increasing the length of the symbol for a given information (or data) transmission rate). Specifically, use of a guard interval (also known as a cyclic prefix/suffix) absorbs ISI between successive blocks of parallel tones (or subchannels) since the guard interval basically extends the cycle of the sub-channel and therefore mitigates the effects of channel dispersion. Expressly stated, for an OFDM system having N sub-channel symbols and a guard interval of duration $T_c$ (with $T_c$ being greater in duration than the length of the channel's impulse response), then, after synchronisation (i.e., after demodulation, by Fast Fourier Transform (FFT), of the composite signal envelope over an appropriate window of received signals), the receiver is able to process each set of N sub-channels with no ISI, although each subchannel will see an attenuation and phase rotation given by the transfer function of the channel at its particular frequency.

It is known that the use of guard intervals in OFDM systems allows non-coherent addition of signals transmitted from multiple transmitters; indeed the single frequency network used in current DAB system exploits this concept in produce a system having simulcast properties. However, a replica (or echo) of each multicarrier symbol is also transmitted from every antenna, with this effectively creating an undesirable multipath environment since these echoes may or may not combine coherently. As will be appreciated, the degree to which reenforcement or destructive combination occurs is a function of the relative antenna locations and the channel propagation environment.

In conventional single carrier modulation schemes, the effects of multipath are addressed by providing diversity selection at a receiver. I n UK patent number 2259430, at least one of a plurality of signals received at different antennas of a communication device is delayed in time by a variable delay element so that a subsequent combination of the plurality of received signals is statistically less likely to result in destructive interference. Other forms of space diversity or antenna diversity are also known, as will be readily understood. For example, EP-A-0430481 describes a diversity arrangement in which each of two parallel receiver chains is connected to one of two ports of a special two-port equaliser that acts as an integrated equaliser/ diversity combiner. In these conventional systems, additional circuitry is required to exploit diversity, and this presents a problem particularly relevant to communication devices, namely that additional circuitry is undesirable because in increases the size and weight of the mobile communication device. As another example, EP-A-0 600 547 discloses a sub-band diversity transmission system comprises a receiver having a plurality of receive antennas. The receiver comprises a filter back of dividing the received signals into sub-bands and means for combining each individual subband. The individual combined sub-bands are then combined into a broad band signal.

Additionally, in relation to a two-way communication system based on an OFDM-type modulation scheme, such a two-way system inherently suffers from an inability to effectively orthogonalise uplink transmissions from different users (which is often cited as a key problem to the deployment of OFDM technology).

Summary of the Invention

According to the present invention there is provided a communication system as claimed in claim 1.

In a preferred embodiment, the system further comprises: means for selecting, responsive to the quality metrics, a limited number of sub-channels each having relatively high quality metrics compared with quality metrics for those sub-channels not selected, the means for selecting thereby limiting the number of sub-channels available for transmssion; and means for modulating data onto each of the limited number of sub-channels at an increased rate that offsets the effects of limiting the number of available sub-channels.

Additionally, the base station may further comprise means for modulating data onto each subset of multiple sub-channels and for transmitting from the plurality of antennas at least one composite signal envelope generated from combining data modulated onto each subset, the plurality of antennas thereby providing diverse propagation paths for transmissions to the mobile communication device; and wherein the antenna of the mobile communication device acts to receive a combination of the signals transmitted from the plurality of antennas of the base station and that arrive thereat.

In a second aspect of the present invention there is provided a method of transmitting and decoding information as claimed in claim 6..

Brief Description of the Drawings

Exemplary embodiments of the present invention will now be described with reference to the accompanying drawings, in which:

FIG. 1    is a waveform diagram illustrating the formulation of a time domain signal of a prior art multicarrier system ;

FIG. 2    is a block diagram of a multicarrier transceiver constructed in accordance with the prior art;

FIG. 3    is a waveform diagram illustrating the purpose of a guard time in relation to a dispersive channel in a prior art multicarrier environment;

FIG. 4    is a waveform diagram that demonstrates use of the guard time in a multicarrier system of the present invention;

FIG. 5    is a block diagram of a multicarrier cellular communication system according to a preferred embodiment of the present invention; and

FIG. 6    is a flow diagram of a preferred process of the present invention.

Detailed Description of a Preferred Embodiment

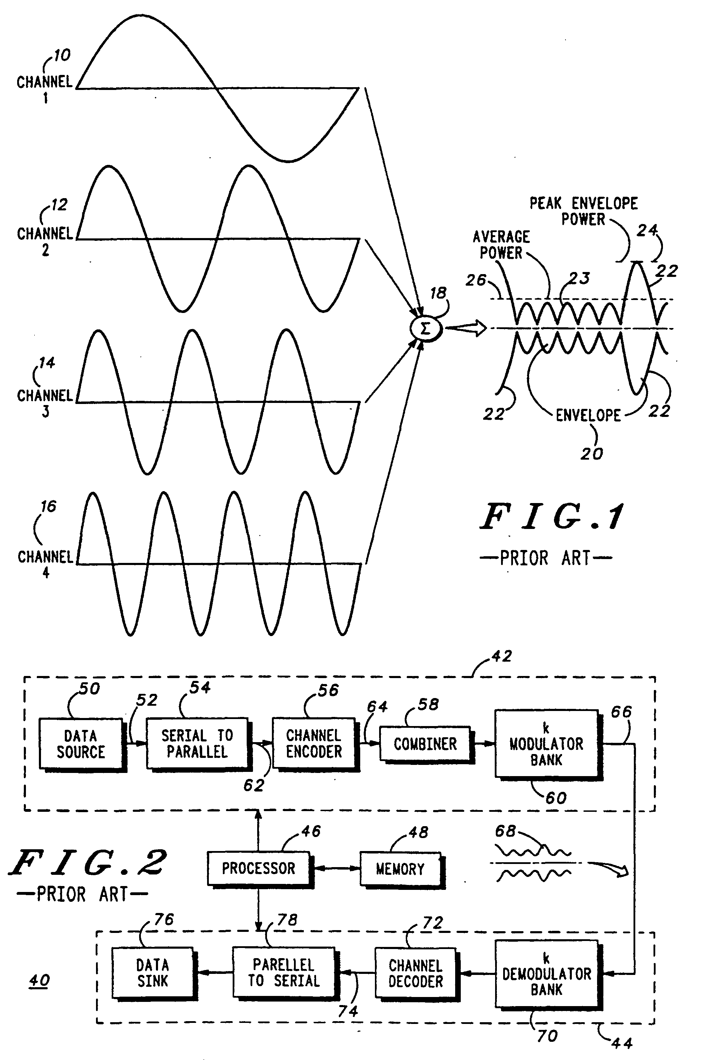

FIG. 1 is a waveform diagram illustrating the formulation of a time domain signal of a prior art multicarrier system. Indeed, FIG. 1 is representative of an OFDM scheme in which the effects of the time delay are mitigated against by distributing data (not shown) amongst a plurality of frequency sub-channels 10-16 (four sub-channels in this particular instance). Typically, a frequency relationship exists between the frequency of a first sub-channel (sub-channel 1) and the other sub-channels in the scheme, e.g. sub-channel 2 is twice the frequency of sub-channel 1, while sub-channel 3 has thrice the frequency of sub-channel 1 (and so on). Distribution of data in this fashion has the effect that each sub-channel is less susceptible to the inherent delay spread, as will be understood. Superposition of individual signals from each sub-channel (occurring in summation block 18) therefore produces a composite envelope 20 having power spikes 22 separated by a relatively low (but oscillating) signal profile 23. However, the power spikes 22 have a peak envelope power (PEP) 24 substantially greater in value than an average power level 26 for the entire composite envelope 20.

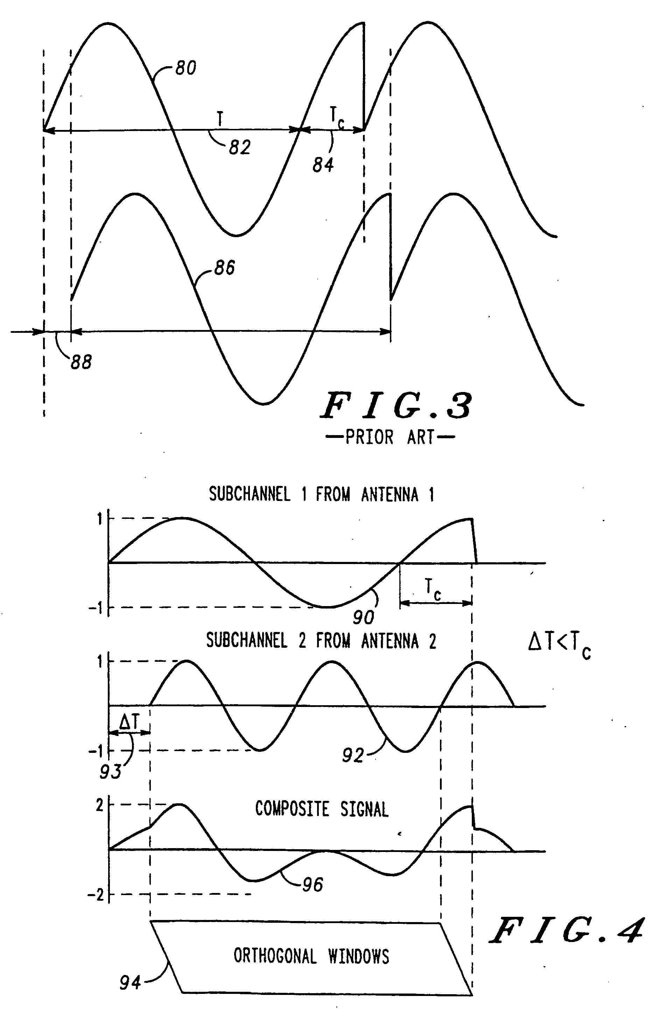

Turning now to FIG. 2, there is shown a block diagram of a multicarrier transceiver 40 constructed in accordance with the prior art. The multicarrier transceiver 40 may have physically separate transmitter 42 and receiver 44 sections. A control processor 46 (with associated memory 48) controls the operation of the transmitter 42 and receiver 44 sections of the multicarrier transceiver 40.

The transmitter section 42 comprises a data source 50 for generating a stream of data 52, a serial-to-parallel converter 54, a channel encoder 56, a combiner 58, a bank of $k$ identical modulators 60. In this example, the data source 50 generates a stream of data symbols each of which can have any one of the logical values 0, 1, ..., $\upsilon$-1, where $\upsilon$ is an integer greater than one; in the described embodiment, $\upsilon$=2, i.e. the data source generates binary data. The logical values may be represented by physical values, such as voltage levels or signal phases, in any conventional manner. These logical values can be represented as points on the unit circle in the complex plane in the form $s=e^{j\phi}$, where $j=\sqrt{-1}$ and $\phi$ takes the respective values

$$\frac{2\pi.0}{\upsilon}, \frac{2\pi.1}{\upsilon}, ..., \frac{2\pi.(\upsilon-1)}{\upsilon}$$

For example, when $\upsilon$=4, the logical values 0, 1, 2 and 3 can be represented by respective complex values 1, $j$, -1 and -$j$. In the general case, the logical values need not be restricted as above, i.e. they may have arbitrary complex values of the form

$$s=m.e^{j\phi}$$

where $m$ represents arbitrary magnitude and $\phi$ represents arbitrary phase.

The serial-to-parallel converter 54 is responsive to the data stream 52 and converts the data stream 52 into parallel data words 62, which in turn are input into the channel encoder 56 for block encoding to facilitate error control. Codeword vectors 64 that are output from the channel encoder 56 are then fed to the combiner 58, and then an output from the combiner 58 is applied to the bank of *k* identical modulators 60 to produce, ultimately, an output signal 66 having a composite signal envelope 68 suitable for transmission. Each modulator in the bank of *k* modulators 60 is assigned to a particular sub-channel frequency, while a spacing between sub-channels is orthogonal, i.e. there is no interference between sub-channels (carriers). Operational control of the multicarrier transmitter (transceiver or receiver) is performed by the control processor 46, as will be readily understood. Typically, the control processor 46 is coupled to a memory device 48 that stores data, such as program information and operands.

The receiver section 44 of the multicarrier transceiver 40 is arranged to receive a multicarrier signal 66 having a composite signal envelope 68. The received signal 66 is applied to a bank of *k* identical demodulators 70, with each demodulator in the bank of *k* demodulators 70 assigned to a particular sub-channel frequency. Eventually, after demodulation in the bank of *k* demodulators 70, channel decoding occurs in channel decoder 72. Channel decoded signals 74 from the channel decoder 72 are ultimately provided to a data sink 76, such as a visual display or audio circuitry, in a parallel or serial format. In the latter instance, a parallel-to-serial converter 78 is positioned between the channel decoder 72 and the data sink 76. Operational control of the multicarrier receiver 44 is performed by the control processor 46, as will be readily understood.

In FIG. 3 there is shown a waveform diagram illustrating the purpose of a guard time in relation to a dispersive channel in a prior art multicarrier environment. Basically, FIG. 3 illustrates how transmission of a simple sinusoid 80, indicative of an information signal, is delayed in time by the dispersive nature of a channel. More particularly, the sinusoid can be seen to have a period 80 of duration T and guard interval 84 (in this case a cyclic suffix rather than a cyclic prefix which would lead the sinusoid) of duration $T_c$. At the end of the guard interval 84, the sinusoid repeats. Although not specifically illustrated, sub-channels would be exactly aligned since these are generated (in the prior art) by a single transmitter, typically using an IFFT (Inverse Fast Fourier Transform) followed by D/A (Digital to Analogue) conversion. The sub-channels must be processed at the receiver over a window of duration equal to the period of the lowest frequency sub-channel, of which there are many in the absence of dispersion. Sinusoid 86 is a time delayed version of sinusoid 80. In fact, reception of sinusoid 80 has merely been delayed in time 88. As such, a portion of the guard interval 84 must be utilised in order to accurately compensate for the multi-path delay, i.e. a total cycle must necessarily be recovered from the transmitted signal. In other words, if the channel dispersion exceeds the guard interval 84, then ISI results because one entire period is required to decode one symbol on a specific dispersive sub-channel.

The present invention will now be described in relation to the remaining drawing figures, at which point it will be seen that the present invention details an efficient method of providing frequency diversity in the context of an OFDM system and also, in the context of a cellular system, an efficient method of orthogonalising uplink transmissions from different users.

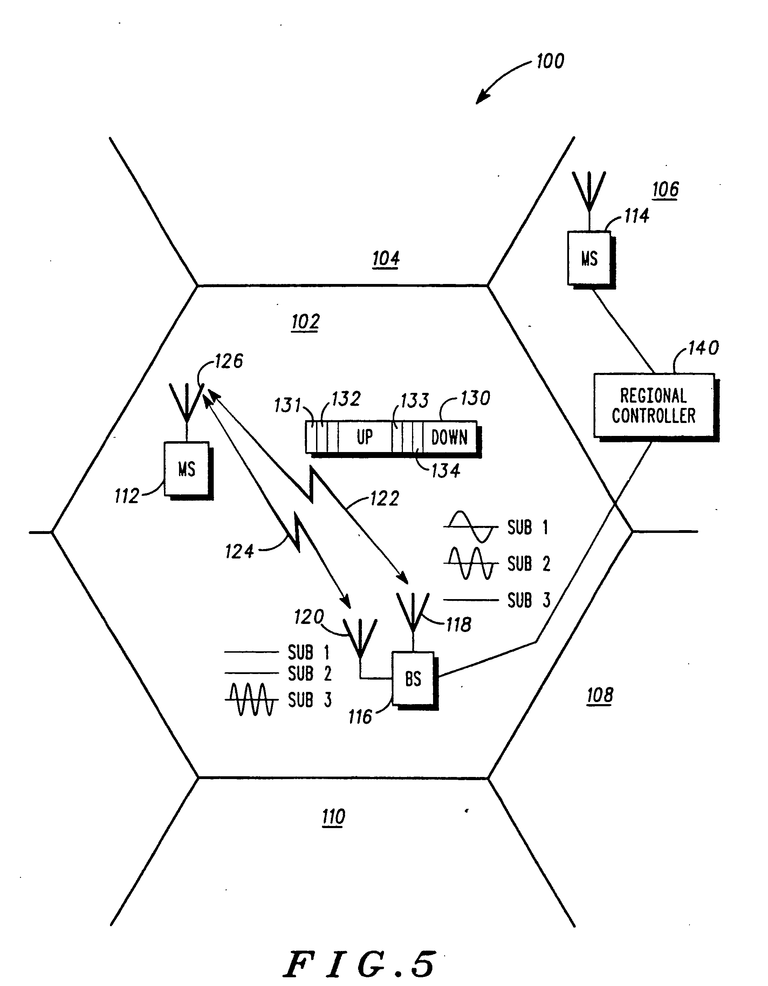

Figure 4 shows an ideal, two sub-channel system that is similar to that of FIG. 3, but in this instance the two sub-channels 90, 92 are broadcast from different point sources, such as from different antennas, which may potentially be served by distinct transmitters. A differential delay $\Delta T$ between the arrival of two components of respective sub-channels is clearly marked (and labelled 93). Provided the differential delay 93 is shorter than the cyclic suffix $T_c$ then orthogonal windows 94 exist to process a composite signal 96 produced from the superposition of the two sub-channels 90, 92.

More particularly, the present invention utilises the concept of intelligently controlled, independent sub-channel transmission from multiple antennas. The present invention exploits the guard interval of the multicarrier system to allow the transmission of a subset of the sub-channels from each of the different and spatially separated antennas. These transmissions combine non-coherently (because they pass through separate and distinct channels) at a single receiver to form a composite OFDM symbol. Differing transmission delays (including impulse responses) can be tolerated because of the guard interval and provided that the guard interval has a greater duration than the time between: i) reception of the first component of the impulse response from an antenna with the shortest propagation delay; and ii) the time duration corresponding to receipt of the last component of the impulse response from a different antenna, i.e. a time corresponding to the longest combined impulse response plus a transmission delay $\Delta T$.

Briefly referring to FIG. 5, a multicarrier cellular communication system 100 of a preferred embodiment of the present invention is shown, which system 100 may be within an indoor (picocellular-type) environment. The cellular communication system 100 comprises a plurality of cells 102-110 which are substantially similar in configuration, namely that each cell comprises a base station (BS) and a plurality of mobiles units 112-114 that are free to wander and receive service throughout the cellular communication system 100. For the sake of brevity and clarity, only cell 102 is seen to contain a base station 116 which is actively serving mobile unit 112. The base station 102 comprises at least two antennas 118-120 that are spatially separated to provide a diversity mechanism, i.e. their separation is such that each antenna experiences uncorrelated but at least partially uncorrelated fading. Consequently, the base station 116 can transmit and receive information signals on different paths 122-124. Explicitly, during communication with mobile unit 112 (on an uplink from the mobile unit 112), a single transmission from mobile unit 112 will be received by the at least two antennas 118-120 on paths 122-124, respectively, while multiple transmissions (on the downlink) from the at least two antennas 118-120 will be received (and air-combined) at a single antenna 126 of mobile unit 112. Clearly, the mobile unit could comprise more than one antenna or an array of antenna elements, but these are potentially rendered redundant by the present invention.

It is envisaged that the multicarrier cellular communication system 100 may have a time division duplex (TDD) structure 130 in which uplink and downlink transmission are separated in time but share a common frequency, although the uplink and downlink may themselves be divided into timeslots 131-134 for different users of the available communications resource. However, the concepts of the present invention should not be limited to such a structure, and should encompass schemes in which the uplink and downlink frequencies are separated into discrete or contiguous frequency bands.

Typically, the base stations of the multicarrier cellular communication system 100 are administered/ arbitrated by a regional controller (140 of FIG. 5), such as an Operations and Maintenance Centre (OMC) or the like. The antennas 118-120 of the base station 116 may each be an array of antenna elements.

The rationale for using the technique of the present invention and structure of the preferred embodiment will become more evident through the following examples.

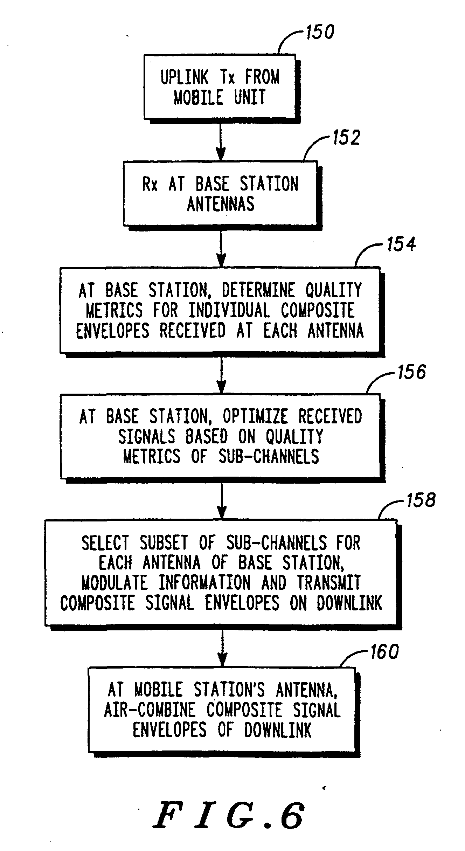

To provide diversity in the multicarrier cellular communication system of FIG. 5 (and selecting a TDD structure for exemplary purposes), the present invention contemplates that a transmission from the antenna 126 of mobile unit 112 will be received by the at least two antennas 118-120; the process is shown in FIG. 6 (step 150). On the uplink, therefore, the base station can benefit from $L^{th}$ order diversity gains be using efficient diversity combining (where $L$ is the number of antennas at the base station; which is two in the specific but exemplary case of FIG. 5), step 152. More particularly, the composite signal envelopes that are received at the at least two antennas (although theoretically identical) will have been subjected to different transmission paths 122-124. Timing acquisition is performed for all antennas 118-120 and the quality metric associated with each sub-channel is determined (step 154). Therefore, after decoding of these composite signal envelopes has occurred in the multicarrier receiver of FIG. 2, the control processor 46 can selectively combine individual sub-channels to optimise the information received (step 156) in the composite signal envelopes. Clearly, other forms of diversity combining are possible, e.g. based on absolute signal levels for each of the L received replicas of the composite signal envelopes, although selection of particular sub-bands from different antennas is more effective in frequency selective environments.

Now, on the downlink, provided that the channel (path) conditions have not changed dramatically (i.

e. that correlation exists with the uplink), then a preferred embodiment of the present invention contemplates that, in an intelligent fashion, individual sub-channels from different antennas at the base station can be selected to optimise the transmission of information from the base station 116 to the mobile station 112. By this it is meant that the base station 116 intelligently selects, based on objective quality measurements for uplink sub-channels as received at the at least two antennas 118-120, which of the sub-channels are grouped together at the available antennas 118-120 of the base station 116 (step 158 of FIG. 6). Therefore, in a four sub-channel system, for example, sub-channels 1 and 4 might be combined to form a first composite signal envelope from antenna 118 while sub-channels 2 and 3 might be combined to form a second composite signal envelope from antenna 120. In summary, the quality metrics are used to determine which antenna to use for the demodulation of each sub-channel, and the present invention therefore provides selection diversity at a sub-channel level (which is relatively insensitive to handset motion). It will of course be appreciated that many techniques can be applied to optimise antenna selection in relation to each sub-channel, with such techniques including maximal ratio combining.

In a preferred embodiment having four possible sub-channels, the two sub-channels with the largest metrics, from either antenna, are selected for 4-DPSK (Differential Phase Shift Keying) transmission, i.e. on each of the sub-channels having the largest metrics, the system modulates data at a higher rate and thereby allows transmission on a reduced number of sub-channels whilst maintaining capacity. As will be appreciated, bit significance can be taken into account for speech applications. The sub-channels corresponding to the third and forth largest metrics are preferably only used for the timing recovery field. Selection of the two sub-channels with the largest metrics can occur at the mobile unit 112 and/or the base station 116.

As will be appreciated, the present invention cannot simultaneously use the same sub-channels on the at least two antennas 118-120 of the base station 116, so this may affect the allocation process.

At the receiver (i.e. the mobile unit 112), air combining of the first and second composite signal envelopes (that have been sent via different transmission paths) generates a non-coherently combined composite signal envelope that benefits from diversity (step 160 of FIG. 6). A difference in arrival time between the first and second composite signal envelopes can be tolerated because of the cyclic extension, although this delay does reduce the amount of channel dispersion which can be tolerated. The mechanism of the present invention is therefore able to provide large gains at the (single antenna) mobile unit 112 because the selection of which antenna 118-120 to use for each sub-channel transmission from the base station 116 is made on a quality basis, e.g. power in the absence of ISI. From the point of view of the mobile unit 112, the base-station diversity provided by the preferred embodiment of the present invention is transparent.

Once a communication link has been established between the base station 116 and the mobile unit 112, uplink transmissions from the mobile unit 112 are preferably structured such as to assign information bits to the sub-channels having the largest two quality metrics, and just synchronisation bits to the others sub-channels.

The preferred embodiment of the present invention provides significantly improvements in system performance. For example, for a scenario of identical two-path power delay profiles for a two antenna base station arrangement with no differential propagation delays between antennas (and considering performance only at the mobile unit which always performs worse than a base station at a given $E_b / N_o$ (Energy per bit to noise) ratio) then, at 20 dB and at a mobile unit speed of $1ms^{-1}$ (1 metre per second), the peak gain over flat fading DPSK is 25 dB (decibels). Indeed, even at a speed of $2ms^{-1}$ performance is better than a basic four sub-channel DPSK system at 30 dB, with the exception of very low delay spreads. Indeed at higher delay spreads performance is considerably better.

In summary, the present invention provides a mechanism for effectively achieving a diversity gain in a single antenna mobile unit by avoiding faded portions of the spectrum that occur in dispersive environments. In effect, the present invention provides an intra-channel dynamic sub-channel allocation scheme in an OFDM environment. The present invention therefore advantageously uses the cyclic extension in OFDM to provide an adaptive diversity system having non-coherent orthogonal addition of individual sub-channels from multiple transmission sites, and therefore provides a solution to the commonly cited problem of orthogonalising different users on the uplink of OFDM based cellular systems, particularly if used with some form of timing advance.

It will, of course, be appreciated that the above description has been given by way of example only, and the modification in detail made be made within the scope of the present invention. For example, better performance can be achieved by using more sophisticated methods to assign bits and energy to sub-channels (see the article entitled "Multicarrier modulation for data transmission: an idea whose time has come" by J.A.C. Bingham, published in IEEE Communications Magazine, pp5-14, May 1990), since the channel can be assumed essentially static during each slot. Adaptation to interference can also be achieved by changing the quality metric used to assess sub-channel quality.

**Claims**

**1.** A communication system arranged to transmit and decode information in composite signal envelopes comprised from multiple sub-channels of modulated data, the communication system comprising:

> a mobile communication device (112) having an antenna (126) and being arranged to receive and transmit composite signal envelopes; and a base station (116) for receiving and transmitting composite signal envelopes, the base station comprising:
>
>> a plurality of spatially separated antennas (118, 120);
>> a decoder for decoding composite signal envelopes received at the plurality of antennas
>> means, responsive to the decoder, for assessing a quality metric for each of the multiple sub-channels of the composite signal envelopes received at the plurality of antennas (118, 120); and
>> means for optimising retrieval of the information by selecting sub-channels, based on the quality metrics, obtained from composite signal envelopes received at the plurality of antennas (118, 120);

and **characterized by** the base station (116) comprising means, responsive to the quality metrics, for selecting a subset of the multiple sub-channels for transmission from each of the plurality of antennas (118, 120).

**2.** A communication system as claimed in Claim 1, further comprising:

> means for selecting, responsive to the quality metrics, a limited number of sub-channels each having relatively high quality metrics compared with quality metrics for those sub-channels not selected, the means for selecting thereby limiting the number of sub-channels available for transmission; and
> means for modulating data onto each of the limited number of sub-channels at an increased rate that offsets the effects of limiting the number of available sub-channels.

**3.** A communication system as claimed in Claim 1, wherein the subsets are mutually exclusive.

**4.** A communication system as claimed in Claim 1, wherein:

> the base station (116) further comprises means for modulating data onto each subset of multiple sub-channels and for transmitting from the plurality of antennas (118, 120) at least one composite signal envelope generated from combining data modulated onto each subset, the plurality of antennas thereby providing diverse propagation paths for transmissions to the mobile communication device (112); and wherein

the antenna (126) of the mobile communication device (112) acts to receive a combination of the signals transmitted from the plurality of antennas (118, 120) of the base station (116) and that arrive thereat.

5. A communication system as claimed in Claim 1, wherein the composite signal envelopes are time division duplexed.

6. A method of transmitting and decoding information sent in composite signal envelopes comprised from multiple sub-channels of modulated data, the composite signal envelopes sent between a base station (116) having a plurality of spatially separated antennas (118, 120) for receiving and transmitting composite signal envelopes and a mobile communication device (112) arranged to transmit composite signal envelopes, the method comprising the steps of:

at the mobile communication (112), sending a composite signal envelope to the base station (116);
at the base station (116) :

receiving the composite signal envelope at each of the plurality and antennas (118, 120);
decoding the composite signal envelopes received at the plurality of antennas (118, 120);
assessing a quality metric for each of the multiple sub-channels of the composite signal envelopes received at the plurality of antennas (118, 120); and
optimising retrieval of the information by selecting sub-channels, based on the quality metrics, obtained from composite signal envelopes received at the plurality of antennas (118, 120);

and **characterized by** comprising the step of at the base station (116), selecting, responsive to the quality metrics, a subset of the multiple sub-channels for transmission from each of the plurality of antennas (118, 120).

7. A method as claimed in claim 6, further comprising the steps of:

selecting, responsive to the quality metrics, a limited number of sub-channels each having relatively high quality metrics compared with quality metrics for those sub-channels not selected, the selection thereby limiting the number of sub-channels available for transmission; and
modulating data onto each of the limited number of sub-channels at an increased rate that offsets the effects of limiting the number of available sub-channels.

8. A method as claimed in claim 6, wherein the subsets are mutually exclusive.

9. A method as claimed in claim 6, further comprising the steps of:

at the base station (116), modulating data onto each subset of multiple sub-channels and transmitting from the plurality of antennas (118, 120) at least one composite signal envelope generated from combining data modulated onto each subset, the plurality of antennas (118, 120) thereby providing diverse propagation paths for transmissions to the mobile communication device (112); and wherein
the antenna of the mobile communication device (112) acts to receive a combination of the signals transmitted from the plurality of antennas (118, 120) of the base station (116) and that arrive thereat.

**Patentansprüche**

1. Kommunikationssystem, das dazu ausgelegt ist, Informationen in zusammengesetzten Signaleinhüllenden zu übertragen und zu decodieren, die mehrere Unterkanäle von modulierten Daten umfassen, wobei das Kommunikationssystem umfasst:

eine mobile Kommunikationsvorrichtung (112), die über eine Antenne (126) verfügt und dazu ausgelegt ist, zusammengesetzte Signaleinhüllende zu empfangen und zu übertragen; und
eine Basisstation (116) zum Empfangen und Übertragen von zusammengesetzten Signaleinhüllenden, wobei die Basisstation umfasst:

eine Mehrzahl räumlich getrennter Antennen (118, 120);
einen Decodierer zum Decodieren bei der Mehrzahl von Antennen empfangener zusammengesetzter Signaleinhüllenden;
Mittel, die auf den Decodierer reagieren, zum Abschätzen einer Qualitätsmetrik für jeden der mehreren Unterkanäle der bei der Mehrzahl von Antennen (118, 120) empfangenen zusammengesetzten Signaleinhüllenden; und
Mittel zum Optimieren einer Wiedergewinnung der Informationen durch Auswählen von Unterkanälen, basierend auf den Qualitätsmetriken, die von zusammengesetzten Signaleinhüllenden erhalten werden, die bei der Mehrzahl von Antennen (118, 120) empfangen werden;

und **dadurch gekennzeichnet ist, dass** die Basisstation (116) Mittel, die auf die Qualitätsmetriken reagieren, zum Auswählen einer Teilmenge der mehreren Unterkanäle zum Übertragen von jeder der Mehrzahl von Antennen (118, 120) umfasst.

2. Kommunikationssystem, wie in Anspruch 1 beansprucht, das weiter umfasst:

Mittel zum Auswählen, in Reaktion auf die Qualitätsmetriken, einer begrenzten Zahl von Unterkanälen, von denen jeder, im Vergleich zu den Qualitätsmetriken solcher Unterkanäle, die nicht ausgewählt wurden, relativ hohe Qualitätsmetriken hat, wobei die Mittel zum Auswählen **dadurch** die Zahl von Unterkanälen, die für eine Übertragung zur Verfügung stehen, begrenzt; und
Mittel zum Modulieren von Daten auf jeden der begrenzten Zahl von Unterkanälen bei einer erhöhten Rate, die die Effekte eines Begrenzens der Zahl verfügbarer Unterkanäle ausgleicht.

3. Kommunikationssystem, wie in Anspruch 1 beansprucht, wobei sich die Teilmengen gegenseitig ausschließen.

4. Kommunikationssystem, wie in Anspruch 1 beansprucht, wobei:

die Basisstation (116) weiter Mittel zum Modulieren von Daten auf jede Teilmenge der mehreren Unterkanäle und zum Übertragen mindestens einer zusammengesetzten Signaleinhüllenden, die durch ein Kombinieren von Daten erzeugt wird, die auf jede Teilmenge moduliert wurden, von der Mehrzahl von Antennen (118, 120) umfasst, wodurch die Mehrzahl von Antennen verschiedene Verbreitungspfade für Übertragungen an die mobile Kommunikationsvorrichtung (112) zur Verfügung stellt, und wobei
die Antenne (126) der mobilen Kommunikationsvorrichtung (112) dazu dient, eine Kombination der Signale zu empfangen, die von der Mehrzahl von Antennen (118, 120) der Basisstation (116) übertragen werden und die dort ankommen.

5. Kommunikationssystem, wie in Anspruch 1 beansprucht, wobei die zusammengesetzten Signaleinhüllenden zeitduplexiert sind.

6. Verfahren zum Übertragen und Decodieren von Informationen, die in zusammengesetzten Signaleinhüllenden gesendet werden, die mehrere Unterkanäle von modulierten Daten umfassen, wobei die zusammengesetzten Signaleinhüllenden zwischen einer Basisstation (116), die über eine Mehrzahl von räumlich getrennten Antennen (118, 120) zum Empfangen und Übertragen zusammengesetzter Signaleinhüllenden verfügt, und einer mobilen Kommunikationsvorrichtung (112), die dazu ausgelegt ist, zusammengesetzte Signaleinhüllende zu übertragen, gesendet werden, wobei das Verfahren die folgenden Schritte umfasst:

bei der mobilen Kommunikation (112), Senden einer zusammengesetzten Signaleinhüllenden an die Basisstation (116);
bei der Basisstation (116):

Empfangen der zusammengesetzten Signaleinhüllenden bei jeder von der Mehrzahl der Antennen (118, 120);
Decodieren der zusammengesetzten Signaleinhüllenden, die bei der Mehrzahl von Antennen (118, 120) empfangen wurden;
Abschätzen einer Qualitätsmetrik für jeden der Mehrzahl von Unterkanälen der bei der Mehrzahl von Antennen (118, 120) empfangenen zusammengesetzten Signaleinhüllenden; und
Optimieren einer Wiedergewinnung von Informationen durch Auswählen, basierend auf den Qualitätsmetriken, von Unterkanälen, die aus zusammengesetzten Signaleinhüllenden erhalten werden, die bei der Mehrzahl von Antennen (118, 120) empfangen wurden;

und **dadurch gekennzeichnet ist**, das es den Schritt umfasst, bei der Basisstation (116), in Reaktion auf die Qualitätsmetriken, eine Teilmenge der mehreren Unterkanäle für eine Übertragung von jeder der Mehrzahl von Antennen (118, 120) auszuwählen.

7. Verfahren, wie in Anspruch 6 beansprucht, das weiter die folgenden Schritte umfasst:

Auswählen, in Reaktion auf die Qualitätsmetriken, einer begrenzten Zahl von Unterkanälen, von denen jeder, im Vergleich zu den Qualitätsmetriken solcher Unterkanäle, die nicht ausgewählt wurden, relativ hohe Qualitätsmetriken hat, wobei das Auswählen **dadurch** die Zahl von Unterkanälen, die für eine Übertragung zur Verfügung stehen, begrenzt; und

Modulieren von Daten auf jeden der begrenzten Zahl von Unterkanälen bei einer erhöhten Rate, die die Effekte eines Begrenzens der Zahl verfügbarer Unterkanäle ausgleicht.

8. Verfahren, wie in Anspruch 6 beansprucht, wobei sich die Teilmengen gegenseitig ausschließen.

9. Verfahren, wie in Anspruch 6 beansprucht, das weiter die folgenden Schritte umfasst:

bei der Basisstation (116), Modulieren von Daten auf jede Teilmenge der mehreren Unterkanäle und Übertragen mindestens einer zusammengesetzten Signaleinhüllenden, die durch ein Kombinieren von Daten erzeugt wird, die auf jede Teilmenge moduliert wurde, von der Mehrzahl von Antennen (118, 120), wodurch die Mehrzahl von Antennen (118, 120) verschiedene Verbreitungspfade für Übertragungen an die mobile Kommunikationsvorrichtung (112) zur Verfügung stellt, und wobei die Antenne der mobilen Kommunikationsvorrichtung (112) dazu dient, eine Kombination der Signale zu empfangen, die von der Mehrzahl von Antennen (118, 120) der Basisstation (116) übertragen werden und die dort ankommen.

**Revendications**

1. Système de communication agencé pour émettre et décoder des informations dans des enveloppes de signal composite composées de multiples sous-canaux de données modulées, Le système de communication comprenant :

un dispositif de communication mobile (112) ayant une antenne (126) et qui est agencé pour recevoir et émettre des enveloppes de signal composite ; et
une station de base (116) destinée à recevoir et émettre des enveloppes de signal composite, la station de base comprenant :

une pluralité d'antennes spatialement séparées (118, 120) ;
un décodeur destiné à décoder les enveloppes de signal composite reçues au niveau de la pluralité d'antennes
des moyens, réactifs au décodeur, destinés à évaluer une métrique de qualité pour chacun des multiples sous-canaux des enveloppes de signal composite reçus au niveau de la pluralité d'antennes (118, 120) ; et

des moyens destinés à optimiser la récupération des informations par sélection de sous-canaux, sur la base des métriques de qualité, obtenus à partir d'enveloppes de signal composite reçues au niveau de la pluralité d'antennes (118, 120) ;

et **caractérisé en ce que** la station de base (116) comprend des moyens, réactifs aux métriques de qualité, destinés à sélectionner un sous-ensemble des multiples sous-canaux pour une transmission à partir de chacune de la pluralité des antennes (118, 120).

2. Système de communication selon la revendication 1, comprenant en outre :

des moyens destinés à sélectionner, de manière réactive aux métriques de qualité, un nombre limité de sous-canaux ayant chacun des métriques de qualité relativement élevées comparé à des métriques de qualité pour les sous-canaux non sélectionnés, les moyens destinés à sélectionner limitant ainsi le nombre des sous-canaux disponibles pour une transmission ; et
des moyens destinés à moduler des données sur chacun du nombre limité des sous-canaux à un débit accru qui décale les effets de limitation du nombre des sous-canaux disponibles.

3. Système de communication selon la revendication 1, dans lequel les sous-ensembles sont mutuellement exclusifs.

4. Système de communication selon la revendication 1, dans lequel :

la station de base (116) comprend en outre des moyens destinés à moduler des données sur chaque sous-ensemble de multiples sous-canaux et destinés à transmettre à partir de la pluralité des antennes (118, 120) au moins une enveloppe de signal composite générée à partir de la combinaison de données modulée sur chaque sous-ensemble, la pluralité d'antennes fournissant ainsi divers trajets de propagation pour des transmissions vers les dispositifs de communication mobile (112) ; et dans lequel l'antenne (126) du dispositif de communication mobile (112) agit pour recevoir une combinaison des signaux transmis à partir de la pluralité d'antennes (118, 120) de la station de base (116) et qui arrivent au niveau de celle-ci.

5. Système de communication selon la revendication 1, dans lequel les enveloppes de signal composite sont duplexées par répartition dans le temps.

**6.** Procédé de transmission et de décodage d'informations envoyées dans des enveloppes de signal composite composées de multiples sous-canaux de données modulées, les enveloppes de signal composite envoyées entre une station de base (116) ayant une pluralité d'antennes spatialement séparées (118, 120) destinée à recevoir et émettre des enveloppes de signal composite et un dispositif de communication mobile (112) agencé pour émettre des enveloppes de signal composite, le procédé comprenant les étapes consistant à :

au niveau de la station mobile (112), envoyer une enveloppe de signal composite à la station de base (116) ;
au niveau de la station de base (116) :

recevoir l'enveloppe de signal composite au niveau de chacune de la pluralité d'antennes (118, 120) ;
décoder les enveloppes de signal composite reçues au niveau de la pluralité d'antennes (118, 120) ;
évaluer une métrique de qualité pour chacun des multiples sous-canaux des enveloppes de signal composite reçus au niveau de la pluralité d'antennes (118, 120) ; et
optimiser la récupération des informations en sélectionnant des sous-canaux, sur la base des métriques de qualité, obtenues à partir des enveloppes de signal composite reçues au niveau de la pluralité d'antennes (118, 120) ;

et **caractérisé en ce qu'**il comprend l'étape consistant, au niveau de la station de base (116), à sélectionner, de manière réactive aux métriques de qualité, un sous-ensemble des multiples sous-canaux pour une transmission à partir de chacune de la pluralité d'antennes (118, 120).

**7.** Procédé selon la revendication 6, comprenant en outre les étapes consistant à :

sélectionner, de manière réactive aux métriques de qualité, un nombre limité de sous-canaux ayant chacun une métrique de qualité relativement élevée comparé aux métriques de qualité pour les sous-canaux non sélectionnés, la sélection limitant ainsi le nombre de sous-canaux disponibles pour une transmission ; et
moduler les données sur chacun du nombre limité des sous-canaux à un débit accru qui décale les effets de la limitation du nombre à des sous-canaux disponibles.

**8.** Procédé selon la revendication 6, dans lequel les sous-ensembles sont mutuellement exclusifs.

**9.** Procédé selon la revendication 6, comprenant en outre les étapes consistant à :

au niveau de la station de base (116), moduler les données sur chaque sous-ensemble de multiples sous-canaux et transmettre à partir de la pluralité d'antennes (118, 120) au moins une enveloppe de signal composite générée à partir de la combinaison de données modulée sur chaque sous-ensemble, la pluralité d'antennes (118, 120), formant ainsi des trajets de propagation divers pour des transmissions vers le dispositif de communication mobile (112) ; et dans lequel
l'antenne du dispositif de communication mobile (112) agit pour recevoir une combinaison de signaux émis à partir de la pluralité d'antennes (118, 120) de la station de base (116) et qui arrivent au niveau de celle-ci.

*FIG.1*

—PRIOR ART—

*FIG.2*

—PRIOR ART—

*FIG.3*

—PRIOR ART—

SUBCHANNEL 1 FROM ANTENNA 1

SUBCHANNEL 2 FROM ANTENNA 2

$\Delta T < T_c$

COMPOSITE SIGNAL

ORTHOGONAL WINDOWS

*FIG.4*

*F I G . 5*

*FIG.6*